# FASCICULE DE BREVET EUROPEEN

(11) **EP 0 592 303 B1**
(45) Date de publication et mention de la délivrance du brevet: **27.11.1996**
(21) Numéro de dépôt: 93402445.6
(22) Date de dépôt: 05.10.1993
(51) Int. Cl.: H02K 5/167, F16C 23/04

(54) **Palier de moteur électrique, coupelle de retenue pour un tel palier et moteur électrique équipé d'un tel palier**
Lager eines elektrischen Motors, Halterungstopf für ein solches Lager und mit einem solchen Lager ausgerüsteter elektrischer Motor
Electric motor bearing, retaining cup for such a bearing and electric motor equipped with such a bearing

(30) Priorité: 05.10.1992 FR 9211778
(43) Date de publication de la demande: 13.04.1994
(73) Titulaire: VALEO SYSTEMES D'ESSUYAGE, 78321 La Verrière (FR)
(72) Inventeur: Blanchet, Pierre, F-86140 Lencloitre (FR)
(74) Mandataire: Gamonal, Didier

(56) Documents cités:
- DE-B- 1 078 378
- US-A- 3 754 802
- US-A- 4 043 617

## Description

La présente invention concerne un palier de moteur électrique du type comportant une rotule destinée à être montée dans un flasque d'extrémité du moteur pour supporter une des extrémités de l'axe du rotor du moteur électrique.

L'invention concerne plus particulièrement un palier du type de celui décrit et représenté dans le document US-A-3,754,802 dans lequel la rotule est montée dans le flasque au moyen d'une coupelle de retenue dont la partie périphérique d'ancrage est montée dans une portée cylindrique du flasque et dont la partie centrale coopère avec la surface externe sphérique de la rotule pour emprisonner élastiquement cette dernière.

La rotule retenue par la coupelle dans le flasque est soumise à une réaction d'induit du rotor importante et la coupelle doit pouvoir résister à des efforts axiaux et radiaux de valeur relativement élevée.

A cet effet, le document US-A-3,754,802 propose une conception de palier dans laquelle la rotule est montée dans un flasque d'extrémité du moteur au moyen d'une coupelle de retenue dont la partie centrale coopère avec la surface externe sphérique de la rotule pour emprisonner élastiquement cette dernière, en assurant la retenue de la rotule selon la direction axiale du palier dans les deux sens de sollicitation de la rotule par rapport au flasque et dont la partie périphérique d'ancrage est montée dans une portée cylindrique du flasque en comportant une série de bras élastiques périphériques coopérant avec ladite portée cylindrique.

On a toutefois constaté que l'utilisation de tels bras élastiques périphériques n'était pas suffisante pour assurer le maintien axial de l'ensemble rotule-coupelle dans le flasque.

Le deuxième mode de réalisation décrit dans le document US-A-3,754,802, selon lequel la coupelle de retenue comporte, à l'extrémité libre de ses bras élastiques, des oreilles s'étendant radialement pour venir en appui axial sur un épaulement prévu sur le flasque, nécessite de réaliser un flasque de forme particulièrement complexe.

De plus, il est nécessaire dans ce cas d'utiliser des vis ou des moyens similaires pour fixer les oreilles de la coupelle sur l'épaulement du flasque.

Une telle conception complexe du flasque en augmente notablement le prix et l'on constate de plus que la valeur du couple de rotulage ne peut être assurée de manière constante et fiable d'un montage à l'autre, dans la mesure où elle dépend non seulement de la réalisation précise de la coupelle et du flasque, mais également du positionnement relatif de ses deux éléments lors de l'assemblage en vue de l'emprisonnement de la rotule.

Afin de remédier à ces inconvénients, l'invention propose un palier de moteur électrique du type mentionné précédemment, dans lequel chaque bras périphérique comporte une première branche qui s'étend vers l'extérieur dans un plan radial et une seconde branche qui s'étend axialement, et tel que décrit dans le préambule de la rev. 1 caractérisé en ce que la seconde branche se termine par une portion d'extrémité libre d'ancrage qui s'étend radialement vers l'extérieur en formant un angle aigu par rapport à la direction de la seconde branche.

Grâce à cette caractéristique principale de l'invention, la valeur du couple de rotulage est indépendante de la précision de l'opération de montage de la coupelle dans le flasque, tout en assurant une parfaite immobilisation contre un éventuel déplacement axial de la coupelle.

Selon d'autres caractéristiques de l'invention :
- la seconde branche de chaque bras périphérique s'étend axialement de part et d'autre du plan diamétral de symétrie de la rotule ;
- la partie centrale de la coupelle comporte une surface de portée concave qui coopère avec une première portion de la surface externe de la rotule qui s'étend d'un premier côté du plan diamétral de symétrie de la rotule, et comporte une série de bras élastiques centraux dont les portions d'extrémités libres coopérent avec une seconde portion de la surface externe de la rotule qui s'étend du second côté du plan diamétral de symétrie de la rotule ;
- chaque bras central est réalisé sous la forme d'une lame élastique qui s'étend depuis un bord radial extérieur de la couronne centrale et qui comporte une première branche qui s'étend vers l'extérieur dans un plan radial, un pli médian en épingle à cheveux et une seconde branche qui s'étend radialement vers l'intérieur en direction de la rotule en formant un angle par rapport à la première branche et qui se termine par ladite portion d'extrémité libre ;
- le pli médian en épingle à cheveux est situé dans le voisinage du plan diamétral de symétrie ;
- les premières branches des bras centraux et des bras périphériques s'étendent vers l'extérieur dans un même plan radial ;
- la coupelle comporte une série de bras élastiques répartis angulairement de manière régulière autour de l'axe de la coupelle.

L'invention propose également une coupelle de retenue pour un palier de moteur électrique réalisé conformément aux enseignements de l'invention.

L'invention propose enfin un moteur électrique équipé d'un palier réalisé conformément aux enseignements de l'invention.

D'autres caractéristiques et avantages de l'invention apparaîtront à la lecture de la description détaillée qui va suivre pour la compréhension de laquelle on se reportera aux dessins annexés dans lesquels :

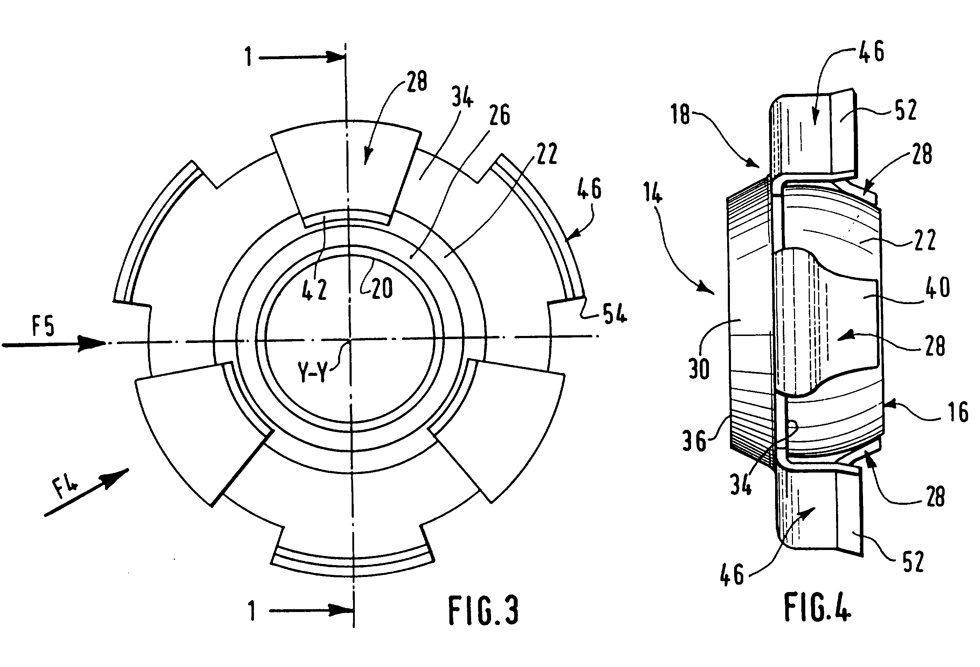

- La figure 1 est une vue en coupe axiale, selon la ligne 1-1 de la figure 3, d'un palier réalisé conformément aux enseignements de l'invention et qui est illustré en position partiellement assemblée ;
- la figure 2 est une vue similaire à celle de la figure 1 sur laquelle le palier est illustré en position assemblée ;
- la figure 3 est une vue selon la flèche F3 de la figure 1 de la coupelle de retenue et de la rotule du palier ;
- la figure 4 est une vue latérale selon la flèche F4 de la figure 3 ;

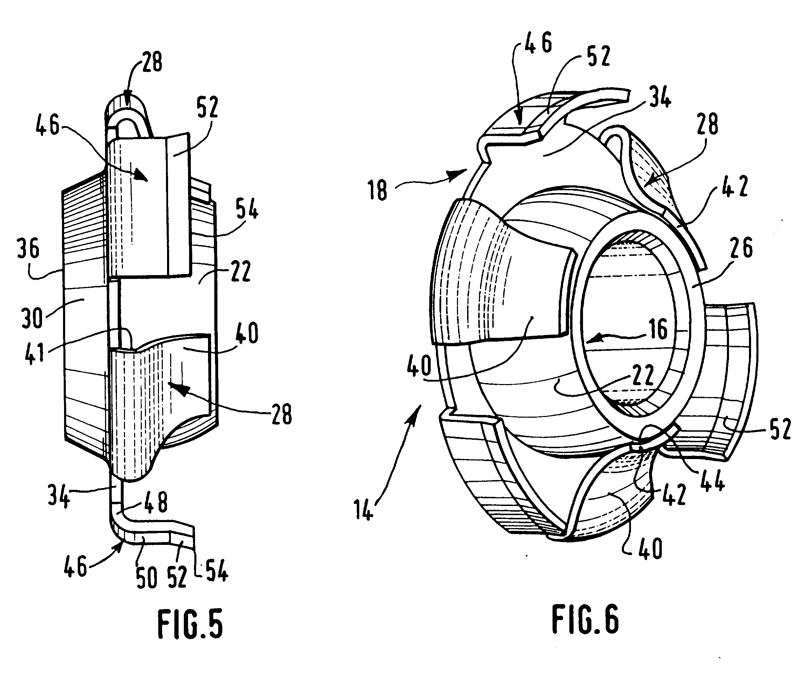

- la figure 5 est une vue latérale selon la flèche F5 de la figure 3 ; et
- la figure 6 est une vue en perspective de la coupelle de retenue et de la rotule du palier.

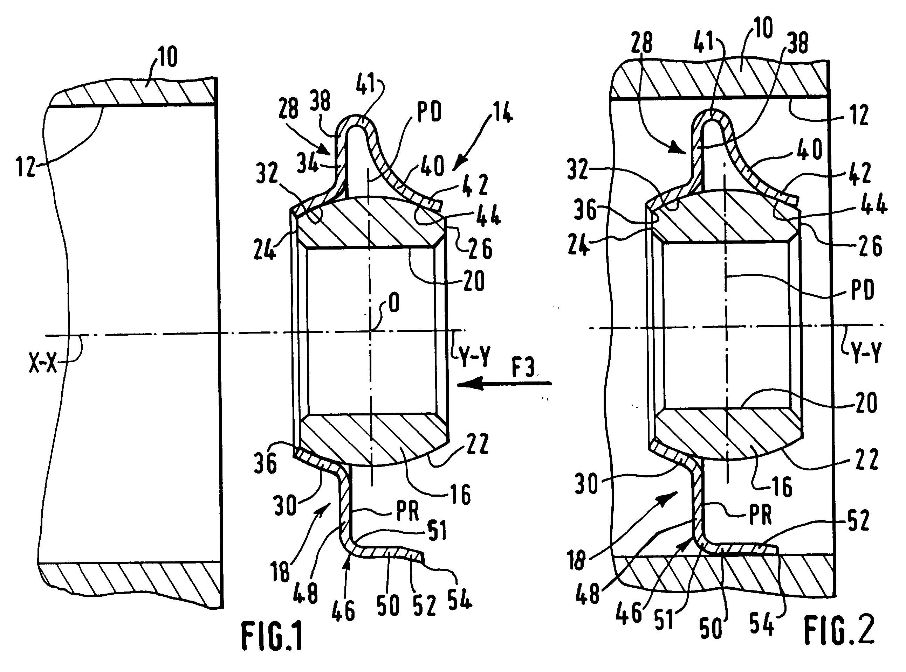

On a représenté sur les figures 1 et 2 la partie centrale 10 d'un flasque d'un moteur électrique dont l'axe de rotation X-X illustré sur la figure correspond à l'axe de rotation du rotor du moteur (non représenté).

Cette partie centrale comporte un alésage cylindrique 12 servant de portée d'ancrage pour un palier 14 de support d'une des extrémités de l'axe du rotor.

Il convient de noter que le terme flasque doit être compris dans un sens très général comme désignant une pièce ou une plaque comportant un tronçon de portée cylindrique d'ancrage 12 constituant un logement propre à recevoir le palier 14.

Le palier 14 est constitué d'une rotule 16 et d'une coupelle de retenue et d'ancrage 18.

Selon une technique connue, la rotule 16 est un tronçon de sphère qui comporte un alésage central 20, destiné à recevoir une extrémité de l'axe de rotation du rotor, d'axe géométrique et qui s'étend symétriquement de part et d'autre d'un plan diamétral de symétrie PD.

La surface périphérique extérieure 22 de la rotule 16 est donc un tronçon de surface sphérique répartie symétriquement de part et d'autre du plan PD et délimitée axialement par les deux faces d'extrémités opposées 24 et 26 de la rotule.

La coupelle 18 comporte une partie centrale de retenue de la rotule 16 et une partie périphérique d'ancrage de la coupelle 18 dans la portée 12.

La partie centrale est constituée par une couronne centrale 30 et par trois bras centraux 28 répartis régulièrement autour de l'axe de la coupelle qui, dans la position alignée de la rotule illustrée aux figures 1 et 2, est confondu avec l'axe Y-Y de cette dernière.

La couronne centrale 30 est une couronne annulaire sensiblement en forme d'un tronc de sphère, de contour continu et qui délimite une surface de portée concave 32 de profil sensiblement complémentaire de celui de la surface sphérique 22 de la rotule 16.

La surface de portée concave 32 coopère avec une première partie de la surface sphérique 22 située d'un côté du plan de symétrie PD, à gauche en considérant les figures 1 et 2.

La section transversale circulaire de la couronne centrale 30 diminue progressivement le long de l'axe Y-Y, de la droite vers la gauche en considérant les figures.

La couronne centrale 30 se prolonge vers l'extérieur par un flanc radial 34 qui s'étend dans un plan radial PR perpendiculaire à l'axe de la coupelle et décalé axialement, vers la gauche en considérant la figure 1, par rapport au plan diamétral de symétrie PD.

Le bord radial intérieur 36 de plus petit diamètre de la couronne centrale 30 s'étend sensiblement au droit de la face d'extrémité 24 de la rotule 16.

Chaque bras central 28 est réalisé sous la forme d'une lame déformable élastiquement et comporte une première branche 38 qui s'étend radialement vers l'extérieur dans le plan radial PR et qui est reliée à une seconde branche 40 par un pli médian en forme d'épingle à cheveux 41.

Comme on peut le constater que les figures 1 et 2, chaque bras central présente, en section par un plan axial, sensiblement une forme en V renversé dont l'ouverture est tournée vers la surface 22 de la rotule 16.

La première branche 38 est sensiblement rectiligne tandis que la seconde branche 40 présente un profil courbe dont la convexité est tournée en direction de la surface 22 de la rotule 16.

Chaque seconde branche 40 se termine par une portion d'extrémité libre 42 dont la face interne 44 coopère élastiquement avec une seconde portion de la surface 22 de la rotule 16 située de l'autre côté du plan de symétrie PD, par rapport à la première portion qui coopère avec la surface de portée concave 32, de manière que les bras centraux 28 constituent une série de pinces qui sollicitent axialement la rotule 16 selon la direction de la flèche F3 de la figure 1.

La face interne 44 des portions d'extrémité 42 peut présenter un profil légèrement concave qui coopère avec la surface sphérique 22 de la rotule 16.

La rotule 16 est ainsi retenue axialement dans les deux sens à l'intérieur de la partie centrale de la coupelle 18 et le choix du matériau dans lequel est réalisée la coupelle ainsi que la conformation et les dimensions des bras centraux 28 déterminent la valeur du couple de rotulage.

Par couple de rotulage, on désigne le couple résistant opposé par la rotule 16 à un mouvement de rotation autour de son centre O. Un tel mouvement de rotation de la rotule 16 permet, en particulier, de compenser un défaut d'alignement entre l'axe Y-Y de la coupelle 18 et l'axe du palier prévu à l'autre extrémité de l'arbre du rotor.

La partie périphérique d'ancrage de la coupelle 18 est constituée par trois bras périphériques 46 qui sont régulièrement répartis autour de l'axe Y-Y de la coupelle et qui sont intercalés avec des bras centraux 28.

Chaque bras périphérique 46 est réalisé sous la forme d'une lame déformable élastiquement et comporte une première branche 48 qui s'étend radialement vers l'extérieur dans le plan radial PR et qui se prolonge par une seconde branche qui s'étend dans une direction axiale sensiblement perpendiculaire au plan radial PR en formant un coude de raccordement 51.

Chaque seconde branche 50 d'un bras périphérique 48 se termine par une portion d'extrémité libre 52 qui s'étend radialement vers l'extérieur en formant un angle aigu par rapport à la direction axiale de la seconde branche 50.

Le bord radial d'extrémité libre extérieur 54 de la portion d'extrémité 52 est prévu pour coopérer avec la surface de portée cylindrique 12 du flasque 10 pour assurer l'ancrage en position de la coupelle 18 dans le flasque 10 par emmanchement à force, selon la direction axiale indiquée par la flèche F3 de la figure 1 de la coupelle 18, préalablement équipée de la rotule 16, dans la portée cylindrique 12.

La force de serrage radial de la coupelle 18 dans la portée 12 est déterminée par les dimensions des bras périphériques 46 et par le choix du matériau dans lequel est réalisée la coupelle.

Comme on peut le constater sur les figures 1 et 2, les secondes branches 50 s'étendent axialement de part et d'autre du plan diamétral de symétrie de manière que la zone d'ancrage soit décalée axialement par rapport à ce plan.

Du fait que les bras périphériques d'ancrage 46 sont indépendants des bras centraux de serrage 28, le montage par emmanchement à force de la coupelle 18 dans sa portée cylindrique 12 ne modifie en aucune manière la valeur du couple de rotulage du palier.

La coupelle 18 est par exemple réalisée en tôle découpée, formée et pliée.

## Revendications

1. Palier (14) de moteur électrique du type comportant une rotule (16) destinée à être montée dans un flasque (10) d'extrémité du moteur au moyen d'une coupelle de retenue (18) dont la partie centrale coopère avec la surface externe sphérique (22) de la rotule (16) pour emprisonner élastiquement cette dernière, en assurant la retenue de la rotule (16) selon la direction axiale (Y-Y) du palier (14) dans les deux sens de sollicitation de la rotule par rapport au flasque (10) et dont la partie périphérique d'ancrage est montée dans une portée cylindrique (12) du flasque (10) en comportant une série de bras élastiques périphériques (46) coopérant avec ladite portée cylindrique (12), chaque bras périphérique (46) comportant une première branche (48) qui s'étend vers l'extérieur dans un plan radial (PR) et une seconde branche qui s'étend axialement, caractérisé en ce que la seconde branche se termine par une portion d'extrémité libre d'ancrage (52) qui s'étend radialement vers l'extérieur en formant un angle aigu par rapport à la direction de la seconde branche (50).

2. Palier selon la revendication 1, caractérisé en ce que la seconde branche (50) de chaque bras périphérique (46) s'étend axialement de part et d'autre du plan diamétral de symétrie (PD) de la rotule (16).

3. Palier selon la revendication 1, caractérisé en ce que la partie centrale de la coupelle comporte une surface de portée concave (32) qui coopère avec une première portion de la surface externe (22) de la rotule (16) qui s'étend d'un premier côté du plan diamétral de symétrie (PD) de la rotule (16), et comporte une série de bras élastiques centraux (28) dont les portions d'extrémités libres (42) coopèrent avec une seconde portion de la surface externe (22) de la rotule (16) qui s'étend du second côté du plan diamétral de symétrie (PD) de la rotule.

4. Palier selon la revendication 3, caractérisé en ce que chaque bras central (28) est réalisé sous la forme d'une lame élastique qui s'étend depuis un bord radial extérieur de la couronne centrale (30) et qui comporte une première branche (38) qui s'étend vers l'extérieur dans un plan radial (PR), un pli médian en épingle à cheveux (41) et une seconde branche (40) qui s'étend radialement vers l'intérieur en direction de la rotule (16) en formant un angle par rapport à la première branche (38) et qui se termine par ladite portion d'extrémité libre (42).

5. Palier selon la revendication 4, caractérisé en ce que le pli médian en épingle à cheveux (41) est situé dans le voisinage du plan diamétral de symétrie (PD).

6. Palier selon la revendication 1 prise en combinaison avec la revendication 4, caractérisé en ce que les premières branches (38, 48) des bras centraux (28) et des bras périphériques (46) s'étendent vers l'extérieur dans un même plan radial (PR).

7. Palier selon l'une quelconque des revendications 1 à 6, caractérisé en ce que la coupelle (18) comporte une série de n bras élastiques (46) répartis angulairement de manière régulière autour de l'axe (Y-Y) de la coupelle (18).

8. Coupelle de retenue (18), caractérisé en ce qu'elle est destinée à équiper un palier selon l'une quelconque des revendications précédentes.

9. Moteur électrique équipé d'un palier selon l'une quelconque des revendications 1 à 8.

## Patentansprüche

1. Lager (14) eines elektrischen Motors in der Ausführung mit einem Kugelgelenk (16), das für den Einbau in einem endseitigen Lagerschild (10) des Motors anhand eines Halterungstopfes (18) bestimmt ist, dessen Mittelteil mit der kugelförmigen Außenfläche (22) des Kugelgelenks (16) zusammenwirkt, um dieses elastisch zu befestigen, wobei die Halterung des Kugelgelenks (16) entlang der axialen Richtung (Y-Y) des Lagers (14) in beiden Beanspruchungsrichtungen des Kugelgelenks im Verhältnis zum Lagerschild (10) herbeigeführt wird, und dessen umfangsmäßiger Verankerungsteil in einer zylindrischen Auflagefläche (12) des Lagerschilds (10) eingebaut ist, wobei er eine Reihe von elastischen Umfangsarmen (46) umfaßt, die mit der besagten zylindrischen Auflagefläche (12) zusammenwirken, wobei jeder Umfangsarm (46) einen ersten Schenkel (48), der sich in einer radialen Ebene (PR) nach außen erstreckt, und einen zweiten Schenkel umfaßt, der sich axial erstreckt, **dadurch gekennzeichnet,** daß der zweite Schenkel in einem freien Verankerungsendstück (52) endet, das sich radial nach außen erstreckt, wobei es einen spitzen Winkel im Verhältnis zur Richtung des zweiten Schenkels (50) bildet.

2. Lager nach Anspruch 1, **dadurch gekennzeichnet,** daß sich der zweite Schenkel (50) jedes Umfangsarms (46) axial beiderseits der diametralen Symmetrieebene (PD) des Kugelgelenks (16) erstreckt.

3. Lager nach Anspruch 1, **dadurch gekennzeichnet,** daß der Mittelteil des Halterungstopfes eine konkave Auflagefläche (32) umfaßt, die mit einem ersten Teilstück der Außenfläche (22) des Kugelgelenks (16) zusammenwirkt, das sich von einer ersten Seite der diametralen Symmetrieebene (PD) des Kugelgelenks (16) aus erstreckt, und daß er eine Reihe von elastischen Mittelarmen (28) umfaßt, deren freie Endstücke (42) mit einem zweiten Teilstück der Außenfläche (22) des Kugelgelenks (16) zusammenwirken, das sich von der zweiten Seite der diametralen Symmetrieebene (PD) des Kugelgelenks aus erstreckt.

4. Lager nach Anspruch 3, **dadurch gekennzeichnet,** daß jeder Mittelarm (28) in Form einer elastischen Leiste ausgeführt ist, die sich von einer radialen Außenkante der Mitteleinfassung (30) aus erstreckt und die einen ersten Schenkel (38), der sich in einer radialen Ebene (PR) nach außen erstreckt, eine mittlere haarnadelförmige Biegung (41) und einen zweiten Schenkel (40) umfaßt, der sich radial nach innen in Richtung des Kugelgelenks (16) erstreckt, wobei er einen Winkel im Verhältnis zum ersten Schenkel (38) bildet, und der in dem besagten freien Endstück (42) endet.

5. Lager nach Anspruch 4, **dadurch gekennzeichnet,** daß die mittlere haarnadelförmige Biegung (41) in der Nähe der diametralen Symmetrieebene (PD) angeordnet ist.

6. Lager nach Anspruch 1 in Kombination mit Anspruch 4, **dadurch gekennzeichnet,** daß sich die ersten Schenkel (38, 48) der Mittelarme (28) und der Umfangsarme (46) in einer gleichen radialen Ebene (PR) nach außen erstrecken.

7. Lager nach einem der Ansprüche 1 bis 6 , **dadurch gekennzeichnet,** daß der Halterungstopf (18) eine Reihe von n elastischen Armen (46) umfaßt, die um die Achse (Y-Y) des Halterungstopfes (18) gleichmäßig winklig verteilt sind.

8. Halterungstopf (18), **dadurch gekennzeichnet,** daß er für die Ausrüstung eines Lagers nach einem der vorangehenden Ansprüche bestimmt ist.

9. Elektrischer Motor, der mit einem Lager nach einem der Ansprüche 1 bis 8 ausgerüstet ist.

## Claims

1. Electric-motor bearing (14) of the type having a swivel (16) designed to be mounted in an end plate (10) of the motor by means of a retaining dish (18), the central part of which cooperates with the spherical external surface (22) of the swivel (16) in order to trap the latter elastically, ensuring the retaining of the swivel (16) in the axial direction (Y-Y) of the bearing (14) in both directions of stressing of the swivel with respect to the plate (10), and the peripheral anchoring part of which is mounted in a cylindrical part (12) of the plate (10), having a series of peripheral elastic arms (46) cooperating with the said cylindrical part (12), each peripheral arm (46) having a first branch (48) which extends outwards in a radial plane (PR) and a second branch which extends axially, characterised in that the second branch ends in a free anchoring end portion (52) which extends radially outwards whilst forming an acute angle with respect to the direction of the second branch (50).

2. Bearing according to Claim 1, characterised in that the second branch (50) of each peripheral arm (46) extends axially on each side of the diametral plane of symmetry (PD) of the swivel (16).

3. Bearing according to Claim 1, characterised in that the central part of the dish has a concave bearing surface (32) which cooperates with a first portion of the external surface (22) of the swivel (16) which extends on a first side of the diametral plane of symmetry (PD) of the swivel (16), and has a series of central elastic arms (28), the free end portions (42) of which cooperate with a second portion of the external surface (22) of the swivel (16) which extends on the second side of the diametral plane of symmetry (PD) of the swivel.

4. Bearing according to Claim 3, characterised in that each central arm (28) is produced in the form of an elastic blade which extends from an external radial edge of the central ring (30) and which has a first branch (38) which extends outwards in a radial plane (PR), a median hairpin bend (41) and a second branch (40) which extends radially inwards in the direction of the swivel (16) whilst forming an angle with respect to the first branch (38) and which ends in the said free end portion (42).

5. Bearing according to Claim 4, characterised in that the median hairpin bend (41) is situated in the vicinity of the diametral plane of symmetry (PD).

6. Bearing according to Claim 1 taken in combination with Claim 4, characterised in that the first branches (38, 48) of the central arms (28) and peripheral arms (46) extend outwards in one and the same radial plane (PR).

7. Bearing according to any one of Claims 1 to 6, characterised in that the dish (18) has a series of n elastic arms (46) angularly distributed in a regular manner about the axis (Y-Y) of the dish (18).

8. Retaining dish (18), characterised in that it is designed to equip a bearing according to any one of the preceding claims.

9. Electric motor equipped with a bearing according to any one of Claims 1 to 8.
